# EUROPÄISCHE PATENTSCHRIFT

(11) **EP 3 018 368 B1**
(45) Veröffentlichungstag und Bekanntmachung des Hinweises auf die Patenterteilung: **10.03.2021**
(21) Anmeldenummer: 15187962.4
(22) Anmeldetag: 01.10.2015
(51) Int. Cl.: F16B 45/00, F16B 5/06

(54) **DOPPELHAKEN UND SYSTEME**
DOUBLE HOOK AND SYSTEMS
DOUBLE CROCHET ET SYSTEMES

(30) Priorität: 06.10.2014 DE 202014104785 U
(43) Veröffentlichungstag der Anmeldung: 11.05.2016
(73) Patentinhaber: Ropimex R. Opel GmbH, 66538 Neunkirchen (DE)
(72) Erfinder: Zimmermann, Rolf, 66386 St. Ingbert (DE)
(74) Vertreter: Vièl, Christof

(56) Entgegenhaltungen:
- AU-B2- 777 109
- JP-A- 2001 200 829
- US-A- 4 073 458
- US-A- 5 480 116
- US-A- 5 806 823
- US-A- 6 027 091
- US-A1- 2004 111 995
- US-A1- 2005 108 860
- US-A1- 2012 018 106
- US-B1- 6 634 610

## Beschreibung

Die vorliegende Erfindung betrifft ein System zum Befestigen von Elementen an einem Profil einer Unterkonstruktion einer Deckenverkleidung
Doppelhaken, insbesondere S-Haken, die mit einem ihrer Haken in eine Perforation eingehängt werden und an deren zweiten Haken ein beliebiges weiteres Element befestigbar ist, sind bekannt.

Die US 2005/0108860 A1 offenbart beispielsweise einen Kinderschutzdoppelhaken zum Einhaken in verschiedene Gegenstände, wobei ein in etwa kreisförmig ausgebildeter Haken des Doppelhakens durch zwei unterschiedlich lange Wandabschnitte gebildet wird. Der längere Wandabschnitt beschreibt in etwa 290° eines Kreisbogens und der kürzere Wandabschnitt beschreibt in etwa 90° eines Kreisbogens. Das offene Ende des kürzeren Wandabschnitts überlappt hierbei mit dem offenen Ende des längeren Wandabschnitts und ist gegen diesen verspannt. Bei einem unsachgemäßen Reißen an dem Doppelhaken werden die Wandabschnitte auseinandergebogen, wodurch die offenen Enden auseinanderbewegt werden wodurch der eingehakte Gegenstand enthakt werden kann.

Doppelhaken werden beispielsweise auch mit einem Haken in eine Perforation eines Deckenclips eingehängt, wobei der Deckenclip an einem Profil einer Unterkonstruktion einer Deckenverkleidung, wie beispielsweise einer Odenwalddecke, angebracht ist, und an dem zweiten Haken wird ein Element befestigt.

Nachteilig bei den bekannten Doppelhaken ist, dass sie derart starr ausgebildet sind, dass wenn an dem befestigten Element gezogen wird, der Deckenclip, oder sogar das gesamte Profil der Unterkonstruktion der Deckenverkleidung, mit der Zugkraft belastet wird.

In einem ungünstigen Fall kann die Belastung des Elementes dazu führen, dass entweder der Deckenclip zerstört wird oder, falls der Deckenclip nicht zerstört wird, das Profil der Deckenkonstruktion beschädigt wird.

Ein derartiger Schaden muss dann behoben werden, was mit hohen Kosten verbunden ist.

Aus der US 2012/0018106 A1 ist ein verbessertes Einweg-Sichtschutzvorhangsystem für den Einsatz in Krankenhäusern, Kliniken, Pflegeheimen und anderen Gesundheitseinrichtungen bekannt. Das Einweg-Sichtschutzvorhangsystem umfasst einen Einwegvorhang, der mit neuartigen, an der Oberkante des Vorhangs befestigten Gleitträgern verpackt und verkauft wird, die zum schnellen Einrasten in vorhandene Deckenschienen geeignet sind und dadurch ein schnelles Entfernen und Ersetzen des Vorhangsystems ermöglichen.

Es ist daher die Aufgabe der Erfindung, ein System bereitzustellen, welches ermöglicht, oben beschriebene Probleme zu vermeiden.

Die Aufgabe wird durch ein System gemäß Anspruch 1 gelöst.

In Krankenhäusern werden Patienten auf Grund von Platzmangel oftmals nicht in separaten Räumen behandelt. Um zu gewährleisten, dass andere Patienten die Behandlung des Arztes nicht wahrnehmen, werden oftmals Vorhänge, die über Deckenclips an einem Profil einer Unterkonstruktion einer Deckenverkleidung befestigt werden, verwendet, die die Privatsphäre des Patienten schützen sollen. Ebenso gibt es Vorhänge, die an Stangen geführt werden, wobei die Stangen an Deckenclips an einem Profil einer Unterkonstruktion einer Deckenverkleidung befestigt werden.

Es ist daher zu der Erfindung gehörig, dass an dem ersten Haken ein Element angeordnet ist, wobei das Element ein Verlängerungshaken, ein Schallschutzvorhang, eine Dekorationspaneele oder ein Sichtschutzvorhang ist.

Hierbei sieht eine Ausgestaltung der Erfindung vor, dass an dem Doppelhaken ein Verlängerungshaken angeordnet ist, wobei der Verlängerungshaken an einem ersten Ende einen offenen oder geschlossenen Haken und an einem zweiten Ende eine Aufnahmeanordnung aufweist, so dass der erste Haken des Doppelhakens form- und kraftschlüssig in der Aufnahmeanordnung gehalten werden kann.

Da der zweite Haken, wie oben beschrieben, eine Öffnung zum form- und/oder kraftschlüssigen Verbinden aufweist, die sich bei Überschreiten einer festgelegten Zugkraft von der Stange löst, kann vermieden werden, dass im Falle, wenn der Patient sich an dem Schallschutzvorhang, der Dekorationspaneele oder dem Sichtschutzvorhang abstützt, nicht das gesamte Element (inklusive der Deckenkonstruktion) abgerissen wird, sondern lediglich der belastete Haken von der Stange abgelöst wird
Die Öffnung des zweiten Hakens wird durch zwei an einer Seite verbundene elastische Wandabschnitte gebildet, zwischen deren freien Enden sich die Öffnung befindet. In der beschriebenen Ausgestaltung ist die Öffnung an der Stelle angeordnet, an der der zweite Haken mit der Stange verbunden ist. Hierbei ist vorgesehen, dass der zweite Haken über seine Öffnung form- und/oder kraftschlüssig mit der Stange verbindbar ist.

Zum Befestigen des Hakens an dem Element oder der Perforation wird der Haken unter Ausübung von Druck, wobei sich die beiden Wandabschnitte elastisch verbiegen, verbunden. Sobald die beiden Wandabschnitte in die Perforation oder die Öse/Schlaufe eingreifen, gehen diese in ihre Ursprungsform zurück.

Es ist vorgesehen, dass die beiden Wandabschnitte derart ausgebildet sind, dass sie bei einer Zugkraft an dem Haken, die größer ist als die vorbestimmte Zugkraft, derart verbiegen, dass die Öffnung vergrößert wird, wodurch sich der Haken von der Perforation des Deckenclips, der Stange oder der Öse/Schlaufe des Elements löst.

Dementsprechend ist vorteilhaft vorgesehen, dass der Doppelhaken einstückig ausgebildet ist und aus Kunststoff - insbesondere Polyamid -, Metall oder Gummi besteht.

Die Materialeigenschaften dieser Materialien sind bekannt. Dementsprechend lassen sich die gewünschten Elastizitätswerte auf die maximale Zugkraft einstellen.

Eine Ausgestaltung der Erfindung sieht vor, dass sich die Wandabschnitte bei einer Zugkraft von 1,1 Kilogramm verbiegen. Nachfolgend wird die Erfindung anhand von Ausführungsbeispielen näher erläutert. Es zeigen:
Fig. 1 einen Deckenclip mit einer Perforation in perspektivischer Ansicht,
Fig. 2 A- D verschiedene Doppelhaken in perspektivischer Ansicht wobei nur C erfindungsgemäß ist;
Fig. 3 A eine Unterkonstruktion einer Deckenverkleidung mit einem Deckenclip und einem Doppelhaken in perspektivischer Ansicht,
Fig. 3 B eine Unterkonstruktion einer Deckenverkleidung mit einem Deckenclip und einem Doppelhaken in Seitenansicht,
Fig. 4 A eine Unterkonstruktion einer Deckenverkleidung mit einem erfindungsgemäßen System, einem Deckenclip, einer Stange und einem Doppelhaken in perspektivischer Ansicht,
Fig. 4 B eine Unterkonstruktion einer Deckenverkleidung mit einem erfindungsgemäßen System, einem Deckenclip, einer Stange und einem Doppelhaken in Seitenansicht,
Fig. 5 A eine Unterkonstruktion einer Deckenverkleidung mit einem Deckenclip, einem Doppelhaken und einem Verlängerungshaken in Seitenansicht,
Fig. 5 B eine Unterkonstruktion einer Deckenverkleidung mit einem Deckenclip, einem Doppelhaken und einem Verlängerungshaken in perspektivischer Ansicht.

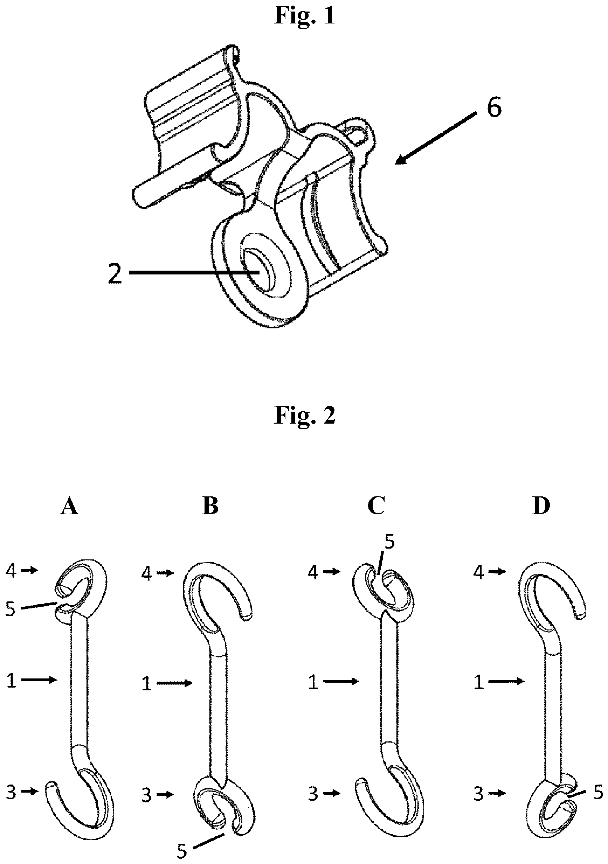

In Fig. 1 ist ein Deckenclip (6) mit einer Perforation (2) in perspektivischer Ansicht dargestellt. Der Deckenclip (6) weist in der Transversalebene zwei Nuten auf. Die Nuten sind auf zwei transversal (rechts und links) zur Sagittalebene angeordneten Pressfedern im oberen Bereich (longitudinal zur Transversalebene) angeordnet. Durch Zusammendrücken der Pressfedern im unteren Bereich weiten sich die Pressfedern im oberen Bereich. Der Deckenclip kann daher auf einem Profil einer Unterkonstruktion einer Deckenanordnung angeordnet werden und durch Loslassen form- und kraftschlüssig an diesem befestigt werden. Die Perforation (2) ist auf einem medial angeordneten Vorsprung unterhalb der Nuten angeordnet. Die Perforation (2) ist in der dargestellten Ausführungsform als kreisrunde Durchbrechung dargestellt. Es ist jedoch ebenfalls vorstellbar, dass die Perforation als offener oder geschlossener Haken ausgebildet ist.

In Fig. 2 A bis 2 D sind verschiedene Doppelhaken (1) in perspektivischer Ansicht dargestellt.

Fig. 2 A zeigt hierbei einen Doppelhaken (1) zum lösbaren Einhängen in eine Perforation, umfassend an einem ersten Ende einen ersten Haken (3) und an einem zweiten Ende einen zweiten Haken (4), wobei der erste Haken (3) offen oder geschlossen ausgebildet ist und der zweite Haken (4) eine Öffnung (5) zum form- und/oder kraftschlüssigen Verbinden mit der Perforation (2) aufweist. Wie dargestellt, ist die Öffnung (5) des Hakens (4) in einem Winkel von 30° bis 150° gegenüber einer Längsachse angeordnet. Die Längsachse verläuft durch die Mittelpunkte der jeweiligen durch die Hakenform aufgespannten Flächen des ersten Hakens (3) und des zweiten Hakens (4). Es ist vorgesehen, dass sich der zweite Haken (4) bei Überschreiten einer festgelegten Zugkraft von der Perforation (2) löst.

Fig. 2 B zeigt einen Doppelhaken (1) zum lösbaren Einhängen in eine Perforation, umfassend an einem ersten Ende einen ersten Haken (3) und an einem zweiten Ende einen zweiten Haken (4), wobei der zweite Haken (4) offen oder geschlossen ausgebildet ist und zum Verbinden mit der Perforation vorgesehen ist, und der erste Haken (3) eine Öffnung (5) zum form- und/oder kraftschlüssigen Verbinden mit einem Element aufweist. Die Öffnung (5) des Hakens (3) ist auf einer Längsachse angeordnet, wobei die Längsachse durch die jeweils gebildeten Flächenmittelpunkte des ersten Hakens (3) und des zweiten Hakens (4) verläuft. Es ist hierbei vorgesehen, dass sich der erste Haken (3) bei Überschreiten einer festgelegten Zugkraft von dem Element löst.

Fig. 2 C zeigt einen Doppelhaken (1) zum lösbaren Befestigen an einer Stange, wobei die Stange an einer Perforation (2) form- und/oder kraftschlüssig befestigt ist, umfassend an einem ersten Ende einen ersten Haken (3) und an einem zweiten Ende einen zweiten Haken (4), wobei der erste Haken (3) offen oder geschlossen ausgebildet ist und der zweite Haken (4) eine Öffnung (5) zum form- und/oder kraftschlüssigen Verbinden mit der Stange aufweist. Die Öffnung (5) des Hakens (4) ist auf einer Längsachse angeordnet, wobei die Längsachse durch die jeweils gebildeten Flächenmittelpunkte des ersten Hakens (3) und des zweiten Hakens (4) verläuft. Es ist vorgesehen, dass sich der zweite Haken (4) bei Überschreiten einer festgelegten Zugkraft von dem Stange löst.

Fig. 2 D zeigt einen Doppelhaken (1) zum lösbaren Befestigen an einer Stange, wobei die Stange an einer Perforation form- und/oder kraftschlüssig befestigt ist, umfassend an einem ersten Ende einen ersten Haken (3) und an einem zweiten Ende einen zweiten Haken (4), wobei der zweite Haken (4) offen oder geschlossen ausgebildet ist und zum Verbinden mit der Stange vorgesehen ist, und der erste Haken (3) eine Öffnung (5) zum form- und/oder kraftschlüssigen Verbinden mit einem Element aufweist, wobei sich der erste Haken (3) bei Überschreiten einer festgelegten Zugkraft von dem Element löst. Wie dargestellt, ist die Öffnung (5) des Hakens (3) in einem Winkel von 30° bis 150 gegenüber einer Längsachse angeordnet. Die Längsachse verläuft durch die Mittelpunkte der jeweiligen durch die Hakenform aufgespannten Flächen des ersten Hakens (3) und des zweiten Hakens (4).

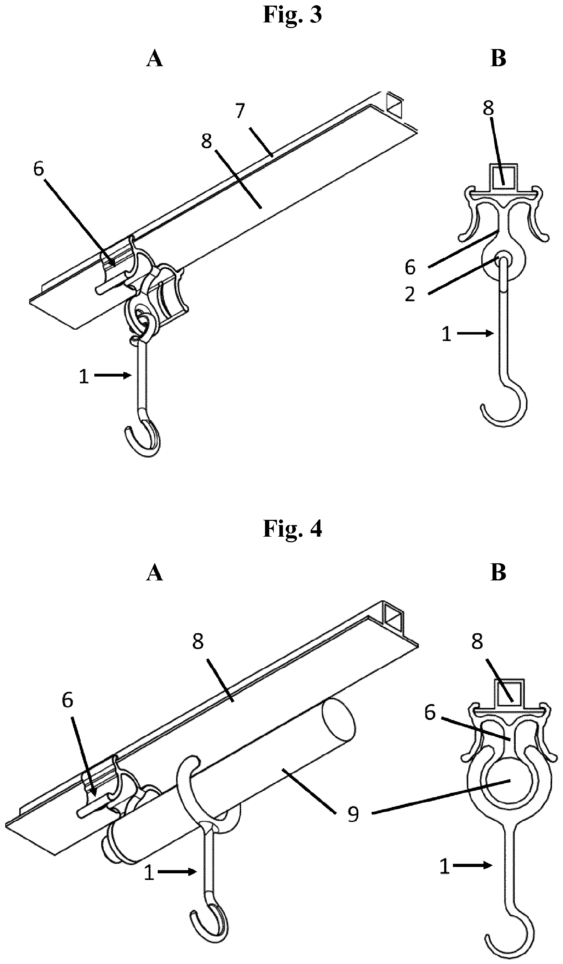

In Fig. 3 A ist ein System zum Befestigen von Elementen an einem Profil (7) einer Unterkonstruktion (8) einer Deckenverkleidung, umfassend einen Deckenclip (6) mit einer Perforation, welcher an einem Profil (7) einer Unterkonstruktion (8) einer Deckenverkleidung form- und/oder kraftschlüssig befestigbar ist, und einen Doppelhaken (1), umfassend an einem ersten Ende einen ersten Haken und an einem zweiten Ende einen zweiten Haken, wobei der Doppelhaken (1) mit der Perforation des Deckenclips (6) form- und/oder kraftschlüssig verbindbar ist in perspektivischer Ansicht dargestellt. Wie dargestellt, ist der erste Haken (der untere Haken des Doppelhakens (1)) offen oder geschlossen ausgebildet und der zweite Haken weist eine Öffnung zum form- und/oder kraftschlüssigen Verbinden mit der Perforation auf. Es ist vorgesehen, dass sich der zweite Haken (4) bei Überschreiten einer festgelegten Zugkraft von der Perforation löst. Fig. 3 B zeigt das soeben beschriebene System in Seitenansicht.

In Fig. 4 A ist ein System zum Befestigen von Elementen an einem Profil (7) einer Unterkonstruktion (8) einer Deckenverkleidung, umfassend einen Deckenclip mit einer Perforation, welcher an einem Profil (7) einer Unterkonstruktion (8) einer Deckenverkleidung form- und/oder kraftschlüssig befestigbar ist, eine Stange (9), die an der Perforation des Deckenclips (6) form- und/oder kraftschlüssig befestigbar ist und einen Doppelhaken (1), umfassend an einem ersten Ende einen ersten Haken und an einem zweiten Ende einen zweiten Haken, wobei der Doppelhaken (1) mit der Stange (9) form- und/oder kraftschlüssig verbindbar ist in perspektivischer Ansicht dargestellt. Wie dargestellt, ist der erste Haken (der untere Haken des Doppelhakens (1)) offen oder geschlossen ausgebildet und der zweite Haken weist eine Öffnung zum form- und/oder kraftschlüssigen Verbinden mit der Stange (9) auf. Dadurch, dass der zweite Haken nicht endfest mit der Stange verbunden ist, kann der Doppelhaken (1) entlang der Stange (9) geführt werden. Um zu verhindern, dass der Doppelhaken (1) an einem Ende der Stange (9) von der Stange (9) entfernt werden kann, ist vorgesehen, dass ein Endstück, dessen Durchmesser größer ist als der Innendurchmesser des Hakens, das mit der Stange form- und/oder kraftschlüssig verbunden ist, an dem Ende der Stange (9) angeordnet sein kann. Es ist für dieses System vorgesehen, dass sich der zweite Haken bei Überschreiten einer festgelegten Zugkraft von dem Stange (9) löst. Es ist ebenfalls vorteilhaft zu der Erfindung gehörig, dass die Stange (9) oder ein Adapterstück, welches an einem Ende der Stange befestigt sein kann, durch die Perforation des Deckenclips (6) geführt wird. Hierdurch wird die Stange gehalten. Fig. 4 B zeigt das soeben beschriebene System in Seitenansicht.

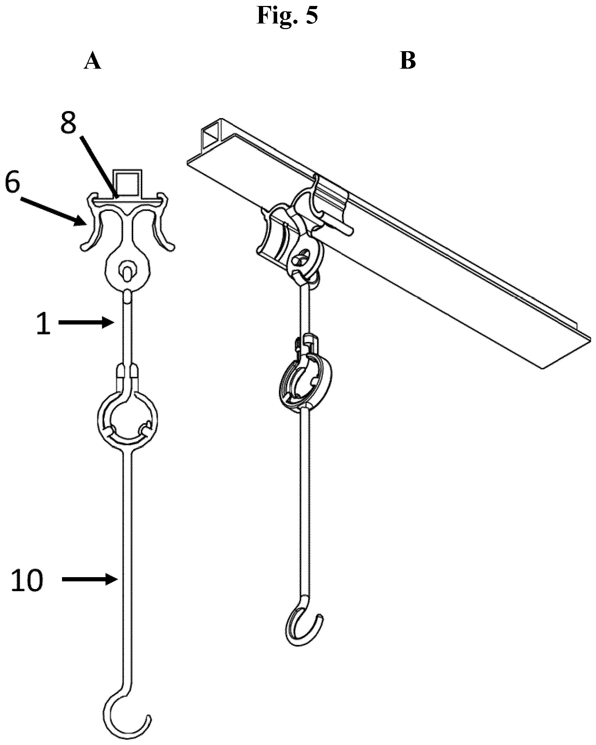

In Fig. 5 ist das in Fig. 3 beschriebene System in Seitenansicht (Fig. 5 A) und in perspektivischer Ansicht (Fig. 5B) dargestellt. Am unteren Haken des Doppelhakens (1) ist ein Element, hier ein Verlängerungshaken (10) kraft- und formschlüssig an dem Doppelhaken (1) angeordnet. Der Verlängerungshaken (10) weist an einem Ende einen offenen oder geschlossenen Haken auf und an dem gegenüberliegenden Ende eine in etwa hakenförmige Aufnahmeanordnung, so dass der Verlängerungshaken mit einem weiteren Haken (eines Doppelhakens oder Verlängerungshakens) form- und kraftschlüssig verbunden werden kann. Durch diese Ausgestaltung kann der Abstand zu dem Deckenclip (6), der an der Unterkonstruktion (8) angeordnet ist, beliebig eingestellt werden. Es ist ebenso vorstellbar, dass mehrere Verlängerungshaken (10) miteinander verbunden sind. Anstelle des Verlängerungshakens (10) kann auch ein Schallschutzvorhang, eine Dekorationspaneele oder ein Sichtschutzvorhang an dem Doppelhaken (1) befestigt werden.

## Patentansprüche

1. System zum Befestigen von Elementen an einem Profil (7) einer Unterkonstruktion (8) einer Deckenverkleidung, umfassend einen Deckenclip mit einer Perforation (2), welcher an einem Profil (7) einer Unterkonstruktion (8) einer Deckenverkleidung form- und/oder kraftschlüssig befestigbar ist, eine Stange (9), die an der Perforation (2) des Deckenclips (6) form- und/oder kraftschlüssig befestigbar ist und einen Doppelhaken (1) zum lösbaren Befestigen an einer Stange (9), umfassend an einem ersten Ende einen ersten Haken (3) und an einem zweiten Ende einen zweiten Haken (4), wobei der erste Haken (3) offen oder geschlossen ausgebildet ist und der zweite Haken (4) eine Öffnung (5) zum form- und/oder kraftschlüssigen Verbinden mit der Stange (9) aufweist, wobei die Öffnung (5) des zweiten Hakens (4) auf einer Längsachse angeordnet ist, die durch die Mittelpunkte des ersten Hakens (3) und des zweiten Hakens (4) verläuft und wobei die Öffnung (5) des zweiten Hakens (4) durch zwei an einer Seite verbundene elastische Wandabschnitte gebildet wird, zwischen deren freien Enden die Öffnung (5) angeordnet ist, wobei die beiden Wandabschnitte derart ausgebildet sind, dass sie sich bei einer Zugkraft an dem Doppelhaken, die größer ist als eine vorbestimmte Zugkraft, derart verbiegen, dass die Öffnung (5) vergrößert wird, wodurch sich der zweite Haken (4) von der Stange (9) löst.

2. System gemäß Anspruch 1,
**dadurch gekennzeichnet, dass** an dem ersten Haken (3) ein Element angeordnet ist, wobei das Element ein Verlängerungshaken (10), ein Schallschutzvorhang, eine Dekorationspaneele oder ein Sichtschutzvorhang ist.

3. System gemäß Anspruch 2,
**dadurch gekennzeichnet, dass** an dem Doppelhaken (1) ein Verlängerungshaken (10) angeordnet ist, wobei der Verlängerungshaken (10) an einem ersten Ende einen offenen oder geschlossenen Haken und an einem zweiten Ende eine Aufnahmeanordnung aufweist, so dass der erste Haken (3) des Doppelhakens (1) form- und kraftschlüssig in der Aufnahmeanordnung gehalten werden kann.

4. System gemäß einem der Ansprüche 1 bis 3,
**dadurch gekennzeichnet, dass** der Doppelhaken (1) einstückig ausgebildet ist und aus Kunststoff - insbesondere Polyamid -, Metall oder Gummi besteht.

5. System gemäß einem der Ansprüche 1 bis 4,
**dadurch gekennzeichnet, dass** die vorbestimmte Zugkraft 1,1 Kilogramm ist.

## Claims

1. System for fastening elements to a profile (7) of a substructure (8) of ceiling cladding, comprising a ceiling clip having a cut-out (2), which can be fastened to a profile (7) of a substructure (8) of ceiling cladding in a form-fitting and/or force-fitting manner, a rod (9), which can be fastened to the cut-out (2) in the ceiling clip (6) in a form-fitting and/or force-fitting manner, and a double hook (1) for detachably fastening to a rod (9), comprising a first hook (3) at a first end and a second hook (4) at a second end, wherein the first hook (3) is open or closed and the second hook (4) comprises an opening (5) for connecting to the rod (9) in a form-fitting and/or force-fitting manner, wherein the opening (5) in the second hook (4) is arranged on a longitudinal axis which extends through the centre points of the first hook (3) and the second hook (4), and wherein the opening (5) in the second hook (4) is formed by two resilient wall portions connected on one side, between which free ends the opening (5) is arranged, wherein the two wall portions are formed such that they are bent under a tensile force on the double hook that is greater than a predetermined tensile force, such that the opening (5) is enlarged, meaning that the second hook (4) detaches from the rod (9).

2. System according to claim 1,
**characterised in that** an element is arranged on the first hook (3), wherein the element is an extension hook (10), a sound curtain, a decorative panel, or a privacy curtain.

3. System according to claim 2,
**characterised in that** an extension hook (10) is arranged on the double hook (1), wherein the extension hook (10) comprises an open or closed hook at a first end and a receiving arrangement at a second end, such that the first hook (3) of the double hook (1) can be held in the receiving arrangement in a form-fitting and/or force-fitting manner.

4. System according to any of claims 1 to 3,
**characterised in that** the double hook (1) is formed in one piece and consists of plastics material - in particular polyamide - metal, or rubber.

5. System according to any of claims 1 to 4,
**characterised in that** the predetermined tensile force is 1.1 kilograms.

## Revendications

1. Système pour fixer des éléments à un profilé (7) d'une sous-structure (8) d'un revêtement de plafond, comprenant une agrafe de plafond, laquelle est munie d'une perforation (2) et qui peut être fixée par complémentarité de forme et/ou en force à un profilé (7) d'une sous-structure (8) d'un revêtement de plafond, une tige (9), qui peut être fixée par complémentarité de forme et/ou en force à la perforation (2) de l'agrafe de plafond (6), et un crochet double (1) à fixer de façon réversible à une tige (9), lequel crochet comprend à une première extrémité un premier crochet (3) et à une deuxième extrémité un deuxième crochet (4), le premier crochet (3) étant conçu ouvert ou fermé, et le deuxième crochet (4) étant muni d'une ouverture (5) pour le relier par complémentarité de forme et/ou en force à la tige (9), l'ouverture (5) du deuxième crochet (4) étant disposée sur un axe longitudinal passant par les centres du premier crochet (3) et du deuxième crochet (4), et l'ouverture (5) du deuxième crochet (4) étant formée par deux sections de paroi élastique reliées d'un côté et entre les extrémités libres desquelles est disposée l'ouverture (5), les deux sections de paroi étant conçues de telle sorte que, lorsqu'une force de traction supérieure à une force de traction prédéterminée est appliquée au double crochet, elles se plient de telle sorte que l'ouverture (5) est agrandie, ce qui libère le deuxième crochet (4) de la tige (9).

2. Système selon la revendication 1, **caractérisé en ce qu'**un élément est disposé sur le premier crochet (3), l'élément étant un crochet de rallonge (10), un rideau d'insonorisation, un panneau décoratif ou un rideau de protection visuelle.

3. Système selon la revendication 2, **caractérisé en ce qu'**un crochet de rallonge (10) est disposé sur le crochet double (1), le crochet de rallonge (10) présentant un crochet ouvert ou fermé à une première extrémité et un dispositif de réception à une deuxième extrémité, de sorte que le premier crochet (3) du crochet double (1) peut être maintenu par complémentarité de forme et en force dans le dispositif de réception.

4. Système selon l'une des revendications 1 à 3, **caractérisé en ce que** le crochet double (1) est formé d'une seule pièce et est fabriqué en plastique - en particulier en polyamide -, en métal ou en caoutchouc.

5. Système selon l'une des revendications 1 à 4, **caractérisé en ce que** la force de traction prédéterminée est de 1,1 kilogramme.
